(19) Europäisches Patentamt
European Patent Office
Office européen des brevets

(11) **EP 4 779 541 A1**

(12) **EUROPEAN PATENT APPLICATION**

(43) Date of publication:
**22.07.2026 Bulletin 2026/30**

(21) Application number: **26151211.5**

(22) Date of filing: **12.01.2026**

(51) International Patent Classification (IPC):
**G06Q 10/0833** (2023.01)    **G06Q 10/087** (2023.01)
**G06Q 10/30** (2023.01)

(52) Cooperative Patent Classification (CPC):
**G06Q 10/0833; G06Q 10/08776; G06Q 10/30**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.01.2025 IN 202521004097**

(71) Applicant: **Tata Consultancy Services Limited Maharashtra (IN)**

(72) Inventors:
• **KAPOOR, Mudra Saurabh**
  **400606 Thane West, Maharashtra (IN)**
• **DESHPANDE, Parijat Dilip**
  **411028 Pune, Maharashtra (IN)**
• **KAUSLEY, Shankar Balajirao**
  **411028 Pune, Maharashtra (IN)**
• **RAI, Beena**
  **Pennsylvania, 15213 (US)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **METHOD AND SYSTEM FOR TRACEABILITY, QUALITY ASSESSMENT AND END OF LIFE RECOMMENDATIONS OF FOOD ITEM**

(57)    Global food systems face a paradox: rising demand and widespread hunger coexist with massive food waste, especially fresh produce. Short shelf life, poor forecasting, and lack of transparency lead to unnecessary disposal, contributing to greenhouse gas emissions and sustainability challenges. Consumers also lack reliable information on freshness and nutritional value, further worsening waste. Hence, embodiments of present disclosure provide a method and system for traceability, quality assessment and end of life recommendations of a food item. Initially an image of the food item is captured and a machine-readable tag on the food item is scanned to retrieve traceability data. Then, using trained Visual Language and physics-based models, visual and biochemical features are analyzed to compute ripeness, shelf life, and freshness scores. Further, usage recommendations and end-of-life options are recommended, including recycling guidance for packaging and upcycling opportunities for leftovers. This integrated approach ensures transparency, optimizes consumption, and supports sustainability.

200

Obtaining i) an image of a food item, and ii) an item identifier associated with the food item by scanning a machine readable tag affixed on the food item — 202

Retrieving a traceability data of the food item from a preconfigured database using the item identifier, wherein the traceability data comprises a static metadata and one or more dynamic journey events of the food item — 204

Performing a real-time quality assessment of the food item based on the image of the food item and the traceability data using a trained Visual Language Model (VLM) and a trained physics based model — 206

Generating an end-of-life recommendation based on the traceability data and the real-time quality assessment by performing at least one of: a) a recycling analysis and b) an upcycling analysis — 208

FIG. 2

**Description**

CROSS-REFERENCE TO RELATED APPLICATIONS AND PRIORITY

The present application claims priority from Indian application no. 202521004097, filed on January 17, 2025.

TECHNICAL FIELD

The disclosure herein generally relates to the field of food item managing techniques, and, more particularly, to method and system for traceability, quality assessment and end of life recommendations of food item.

BACKGROUND

The growing world population has increased food demand, placing critical pressure on agricultural output. Food production systems face multiple challenges due to erratic climatic changes. A 2023 study reported that 281.6 million people, or 21.5% of the analyzed population, experienced acute food insecurity across 59 countries, highlighting a significant gap in the food demand-supply ecosystem. Efforts are underway to improve crop and fresh produce outputs on limited cultivable land, with scientific research focusing on the safe use of fertilizers, pest-specific pesticides, and genetic modification to enhance agricultural yield. However, paradoxically, one-third of the food produced for human consumption is wasted or discarded due to nonconsumption at the optimal time. This issue is particularly relevant to fresh fruits and vegetables, which are among the most expensive food items. Several factors contribute to the excessive dumping of fresh produce, including their short shelf life, logistical issues, inaccurate forecasting, excessive storage at sites with low sales, geographical disturbances, and global political instability. In addition to wasting land, water, energy, and human labor, this waste generates greenhouse gases that contribute to global warming and overload treatment plants. An estimated 1.3 billion tons of food waste results in 3.3 gigatons of Carbon Dioxide ($CO_2$) equivalent per year, accounting for 6% of total anthropogenic greenhouse gas emissions. The critical issue of food waste is addressed among the 17 Sustainable Development Goals (SDGs), aiming to reduce per capita global food waste by 50% by 2030. Thus, a dichotomy of insufficient food and hungry populations is faced on one side and excessive food waste on the other. Sustainable food production, supply chain management, responsible purchase and consumption, and appropriate remediation are imperative.

In developed countries, consumer buying potential has increased, and awareness of food nutritional value has grown. Consumers are now willing to pay higher prices for fresh produce. Claims such as vegan, organic, and naturally grown have become popular as consumers seek genuinely nutritious food that justifies its cost. Supermarkets often sell this fresh produce at higher prices due to these claims. However, consumers rarely have the means to ascertain the true origin of the food, its nutritional value, or its status. They may not know whether the product is ready to eat, raw, can survive a few days in the refrigerator, or needs to be consumed immediately. Unfortunately, food that appears slightly unattractive is often wasted despite having intact and valuable nutritional content. Answers to these questions can be provided using a digital passport. A Digital Passport (DP) for fresh food is an electronic record that tracks the journey of food from farm to fork and ultimately disposal of its packaging waste. This passport could be represented by a Quick Response (QR) code, Radio Frequency Identifier (RFID) tag, or barcode.

Digital food passports have huge implementation challenges due to interoperability. Each food item needs to be connected to internet. Packed food have that facility. In case of fresh food, it is at evolving stage. Fresh food is highly perishable. Smart packaging and labeling on fresh food can provide the base for internet connectivity. Another challenge is data standardization since batch-to-batch variation in food is high. Digital passports for food items have been attempted in the art but they have certain drawbacks. While some of the works provide dynamic update of the supply chain only (location and time where the produce has reached), they do not trace the food quality as such. One of the works assessed quality estimation of the fruit using 3D Computed Tomography (CT) scanned from many directions by rotating the food product on a specially developed carousel. This collected the data for rapidly calculating the 3D images. This is not a frugal mechanism. CT scan or X ray machine is required to obtain a real time assessment and getting each food product scanned through CT scan or X ray is a difficult task to achieve.

SUMMARY

Embodiments of the present disclosure present technological improvements as solutions to one or more of the above-mentioned technical problems recognized by the inventors in conventional systems. For example, in one embodiment, a method for traceability, quality assessment and end of life recommendations of food item is provided. The method includes obtaining i) an image of a food item, and ii) an item identifier associated with the food item by scanning a machine readable tag affixed on the food item. Further, the method includes retrieving a traceability data of the food item from a preconfigured database using the item identifier, wherein the traceability data comprises a static metadata and one or more dynamic journey events of the food item. The method further includes performing a real-time quality assessment of the food item based on the image of the food item and the traceability data using a trained Visual Language Model (VLM) and a trained physics based model. Furthermore, the method includes generating an end-of-life recommendation based on the traceability data and the real-time quality assessment by performing at least one of: a) a recycling analysis and b) an upcycling analysis. The recycling analysis comprises classifying a packaging material of the food item comprised in the traceability data, determining a primary disposal use of the packaging material, and recommending a disposal location among a plurality of disposal locations based on comparison of a distance between a user location and each of the plurality of disposal locations. The upcycling analysis comprises identifying one or more repurposing opportunities for one or more portions of the food item based on the real-time quality assessment and recommending a processing facility suitable for a selected repurposing opportunity among the one or more repurposing opportunities.

In another aspect, a system for traceability, quality assessment and end of life recommendations of food item is provided. The system includes: a memory storing instructions; one or more communication interfaces; and one or more hardware processors coupled to the memory via the one or more communication interfaces, wherein the one or more hardware processors are configured by the instructions to obtain i) an image of a food item, and ii) an item identifier associated with the food item by scanning a machine readable tag affixed on the food item. Further, the one or more hardware processors are configured to retrieve a traceability data of the food item from a preconfigured database using the item identifier, wherein the traceability data comprises a static metadata and one or more dynamic journey events of the food item. The one or more hardware processors are further configured to perform a real-time quality assessment of the food item based on the image of the food item and the traceability data using a trained Visual Language Model (VLM) and a trained physics based model. Furthermore, the one or more hardware processors are configured to generate an end-of-life recommendation based on the traceability data and the real-time quality assessment by performing at least one of: a) a recycling analysis and b) an upcycling analysis. The recycling analysis comprises classifying a packaging material of the food item comprised in the traceability data, determining a primary disposal use of the packaging material, and recommending a disposal location among a plurality of disposal locations based on comparison of a distance between a user location and each of the plurality of disposal locations. The upcycling analysis comprises identifying one or more repurposing opportunities for one or more portions of the food item based on the real-time quality assessment and recommending a processing facility suitable for a selected repurposing opportunity among the one or more repurposing opportunities.

In yet another aspect, there are provided one or more non-transitory machine-readable information storage mediums comprising one or more instructions which when executed by one or more hardware processors cause a method for traceability, quality assessment and end of life recommendations of food item. The method includes obtaining i) an image of a food item, and ii) an item identifier associated with the food item by scanning a machine readable tag affixed on the food item. Further, the method includes retrieving a traceability data of the food item from a preconfigured database using the item identifier, wherein the traceability data comprises a static metadata and one or more dynamic journey events of the food item. The method further includes performing a real-time quality assessment of the food item based on the image of the food item and the traceability data using a trained Visual Language Model (VLM) and a trained physics based model. Furthermore, the method includes generating an end-of-life recommendation based on the traceability data and the real-time quality assessment by performing at least one of: a) a recycling analysis and b) an upcycling analysis. The recycling analysis comprises classifying a packaging material of the food item comprised in the traceability data, determining a primary disposal use of the packaging material, and recommending a disposal location among a plurality of disposal locations based on comparison of a distance between a user location and each of the plurality of disposal locations. The upcycling analysis comprises identifying one or more repurposing opportunities for one or more portions of the food item based on the real-time quality assessment and recommending a processing facility suitable for a selected repurposing opportunity among the one or more repurposing opportunities.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for traceability, quality assessment and end of life recommendations of food item, according to some embodiments of the present disclosure.
FIG. 2 is a flow diagram illustrating a method for traceability, quality assessment and end of life recommendations of food item, using the system of FIG. 1, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Global food systems face a paradox of rising food demand and widespread hunger alongside massive food waste. Erratic climate conditions and limited cultivable land challenge agricultural output, while one-third of produced food-especially fresh fruits and vegetables-is discarded due to short shelf life, logistical inefficiencies, and poor forecasting. This waste not only exacerbates food insecurity but also contributes significantly to greenhouse gas emissions. Although consumers in developed nations demand high-quality, organic produce, they lack reliable information on freshness and nutritional value, leading to unnecessary disposal. Digital food passports could address traceability and quality assurance, but implementation faces hurdles such as interoperability, data standardization, and costeffective quality assessment. Hence, embodiments of present disclosure provide a method and system for traceability, quality assessment and end of life recommendations of a food item. The method begins by capturing an image of the food item and scanning a machine-readable tag to retrieve traceability data (which includes static metadata and dynamic journey events) from a preconfigured database. Using a trained Visual Language Model (VLM) and a physics-based model, a real-time quality assessment is performed by analyzing visual features and biochemical data to compute ripeness, shelf life, and freshness scores. Based on these insights, usage recommendations and end-of-life options are generated, including recycling guidance for packaging and upcycling opportunities for leftover food, leveraging Artificial Intelligence (AI) for repurposing suggestions and disposal location recommendations. This integrated approach ensures transparency, optimizes consumption, and supports sustainability across the food supply chain.

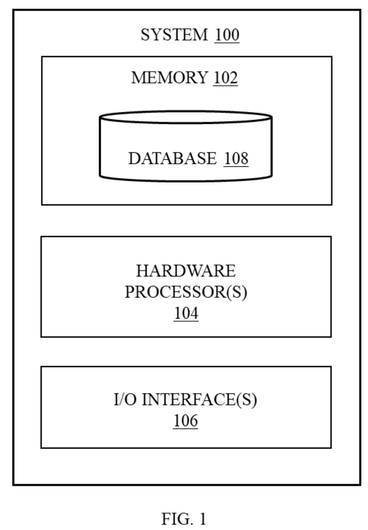

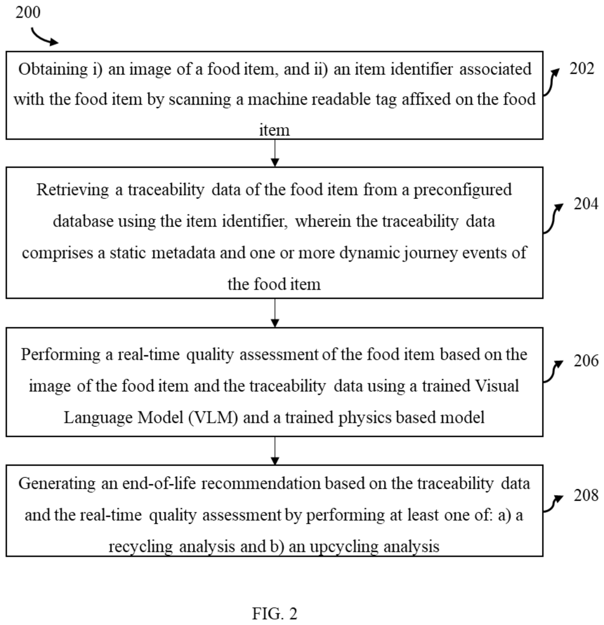

Referring now to the drawings, and more particularly to FIGS. 1 and 2, where similar reference characters denote corresponding features consistently throughout the figures, there are shown preferred embodiments, and these embodiments are described in the context of the following exemplary system and/or method.

FIG. 1 illustrates an exemplary block diagram of a system for traceability, quality assessment and end of life recommendations of food item, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The database 108 stores information pertaining to inputs fed to the system 100 and/or outputs generated by the system (e.g., at each stage), specific to the methodology described herein. Functions of the components of system 100 are explained in conjunction with flow diagram of FIG. 2, for traceability, quality assessment and end of life recommendations of food item.

FIG. 2 is a flow diagram illustrating a method 200 for traceability, quality assessment and end of life recommendations of food item, using the system 100 of FIG. 1, according to some embodiments of the present disclosure. In an embodiment, the system 100 comprises one or more data storage devices or the memory 102 operatively coupled to the processor(s) 104 and is configured to store instructions for execution of steps of the method 200 depicted in FIG. 2 by the processor(s) or one or more hardware processors 104. The steps of the method of the present disclosure will now be explained with reference to the components or blocks of the system 100 as depicted in FIG. 1, and the flow diagram of FIG. 2, for traceability, quality assessment and end of life recommendations of food item. Although process steps, method steps, techniques, or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method 200, the one or more hardware processors 104 are configured to obtain i) an image of a food item, and ii) an item identifier (ID) associated with the food item by scanning a machine readable tag affixed on the food item. The machine readable tag is a Near Field Communication (NFC) tag, a Quick Response (QR) code, and/or the like. The machine readable tag stores a unique ID of the food item which is also stored in the database 108 (alternatively referred to as preconfigured database, cloud database, and the like). The unique ID (alternatively referred to as the item identifier) can be retrieved by scanning the machine readable tag using a smartphone or a similar device. The database 108 maps the item identifier with static metadata provided by a farmer, for example, while packaging the food item. The static metadata comprises at least a location of packaging, a date of packaging, type of packaging material, best-before date, shelf life, target use, producer details, and nutritional values. During the journey of the food item from the farmer to the producer, to the warehouse, to the retail and then finally to the consumer, one or more dynamic journey events are captured and stored against a corresponding item ID in the database 108. For example, the one or more dynamic journey events include a distance travelled by the food item, vibrations of travel, temperature changes in storage during transport and the like. The static metadata and the one or more dynamic journey events of the food item constitute a traceability data of the food item which is retrieved from the database 108 using the item identifier at step 204 of the method 200 by the one or more hardware processors 104.

Once the traceability data is retrieved, at step 206 of the method 200, the one or more hardware processors 104 are configured to perform a real-time quality assessment of the food item based on the image of the food item and the traceability data using a trained Visual Language Model (VLM) and a trained physics based model. In order to train the VLM, food chambers with sensors are used to capture Volatile Organic Compounds (VOC) of food items at scheduled time periods, temperatures, and humidity conditions. Physical assessment of reducing sugar/micro/macronutrients is performed to measure the percentage and create proportionate reaction to its ripening performance. The chambers are designed to meet specific requirements of food quality evaluation. At each time-point/stamp, images are scanned and correlated to biochemical parameters to create a multimodal model. The VLM is trained on these images to capture the changes in VOC, reducing sugar and nutrients. After training the VLM, it is converted into a lightweight format to run on mobile devices using TensorFlow Lite to enable real-time quality assessment on a phone app. The trained physics-based model is a rate kinetics model as described in the Indian Patent application no. 201921004783 titled "System and method for monitoring and quality evaluation of perishable food items". The rate kinetics model is trained using rate kinetic data collected from a networked sensing framework that monitors perishable food items under controlled conditions. The rate kinetics data includes multivariate sensory and visual parameters such as weight loss, moisture content, gas emissions ($CO_2$, ethylene, $NH_3$), and biochemical attributes captured through sensors (pH, temperature, humidity, optical, NIR, gas sensors). The collected data forms time-series profiles of attribute changes, which are iteratively fitted to reaction rate equations (zero, first, and second order) to model biochemical changes during different post-harvest lifecycle stages. The model determines the reaction order and rate constants for each stage, partitions the lifecycle accordingly, and estimates shelf life by aggregating predicted values across attributes. The lowest shelf-life value among attributes is selected.

The real-time quality assessment of the food item comprises extracting a plurality of features from the image. The plurality of features comprises a color index ($CI$), a hue value, a lenticel density ($LD$), and one or more defects. The color index is calculated based on red ($R$) and green ($G$) channel intensity in the image according to equation 1, where $\varepsilon$ is a small constant to avoid division by zero. Higher values of $CI$ means red dominance indicating ripeness. On the other hand, lower values of $CI$ means green dominance indicating unripe state. Next, a ripeness index of the food item is determined by i) estimating an image-derived ripeness value using the trained VLM based on the plurality of features, ii) estimating a biochemical-derived ripeness value using data from a plurality of biochemical sensors and iii) computing the ripeness index as a weighted sum of the image-derived ripeness value and the biochemical-derived ripeness value.

$$ CI = \frac{R - G}{R + G + \varepsilon} \ \ldots\ldots (1) $$

The image-derived ripeness value is estimated according to equation (2). In equation (2), $\theta_0$ is a bias, $\theta_j$ is a coefficient for $z_j$ element of VLM embedding, $\alpha_1$ to $\alpha_4$ are coefficients of the features color index $CI$, hue $H$, lenticel density $LD$ and defects $D_{img}$. The biochemical-derived ripeness value is estimated according to equation (3). The parameters are measured by the plurality of biochemical sensors and saved in a dataset and can be reused for the same food item. For example, the plurality of biochemical sensors include but not limited to, pH sensor, optical sensor, gas sensor (for instance, $O_2$, $CO_2$, $NH_3$, methane, ethylene, and so on), temperature sensor, humidity sensor, weighing sensor, color sensor, NIR (Near Infrared) sensor with micro spectrophotometer, ultrasonic sensor, GSR (Galvanic Skin Response) sensor. The parameters are normalized via sigmoid(s) or z-scores around calibrated centers and summed up as in equation (3) to estimate the biochemical-derived ripeness value. In equation (3), parameters $\hat{F}$ indicates a normalized firmness value of the food item, $\hat{B}$ indicates normalized percentage of soluble solids, $\hat{Car}$ indicates normalized concentration of carotenoids (mg/100g), $\hat{Chl}$ indicates normalized value of chlorophyll content in the food item, $p\hat{H}$ indicates normalized pH value of the food item, $T\hat{A}$ indicates normalized value of titratable acidity of the food item, $\hat{CO2}$ indicates normalized respiration rate of the food item, $\hat{E}$ indicates normalized ethylene content in the food item, $\beta_0$ is a bias term, and $\beta_F$, $\beta_B$, $\beta_{Car}$, $\beta_{Chl}$, $\beta_{pH}$, $\beta_{TA}$,

$\beta_{CO2}$, $\beta_E$ are coefficients for respective biochemical parameter. Equation (4) represents the computation of the ripeness index using the image-derived ripeness value and the biochemical-derived ripeness value. In equation (4), $w_{img}$ and $w_{bio}$ are predefined weightages assigned to the image-derived ripeness value and the biochemical-derived ripeness value, respectively, $RI^*$ is the ripeness index and $w_{img} + w_{bio} = 1$. The ripeness index is a continuous value; hence it is mapped to an integer class $RI$ (1-5: unripe, early ripe, ripe, overripe, rotten).

$$RI_{img} = \theta_0 + \Sigma_j \theta_j z_j + \alpha_1 \cdot CI + \alpha_2 \cdot H + \alpha_3 \cdot LD + \alpha_4 \cdot D_{img} \ ..... \ (2)$$

$$RI_{bio} = \beta_0 + \beta_F \cdot (1 - \hat{F}) + \beta_B \cdot \hat{B} + \beta_{Car} \cdot \hat{C}ar + \beta_{Chl} \cdot (1 - \hat{C}hl) + \beta_{pH} \cdot p\hat{H} + \beta_{TA} \cdot (1 - T\hat{A}) + \beta_{CO2} \cdot \hat{C}O2 + \beta_E \cdot \hat{E} \quad (3)$$

$$RI* = w_{img} \cdot RI_{img} + w_{bio} \cdot RI_{bio} \ ..... \ (4)$$

Then, a shelf life of the food item is determined using the trained physics-based model based on the traceability data. Quality deterioration is modeled with Arrhenius temperature dependence and multiplicative modifiers for relative humidity ($RH$), ripeness stage ($RI$), cultivar ($c$), damage ($D$), and vibration ($v$) as given by equation (5). In equation *(5),*

$$f_{RI}(RI) = 1 + a_r \cdot \left(\frac{RI - 1}{4}\right), f_D(D) = 1 + a_D \cdot D, f_v(v) = 1 + a_v \cdot v. \ a_r, a_D,$$ and $a_v$ are coefficients for ripeness stage effect, damage effect, and vibration effect, respectively. $a_r$ determines how much the deterioration rate changes as ripeness increases. $a_D$ scales the impact of physical damage on deterioration. $a_v$ quantifies how vibration during handling or transport accelerates deterioration. The shelf life is derived from an exponential quality decay (as given by equation (6)), clipped to [1, 21] days (room) or [1, 28] days (refrigerated, cultivardependent).

$$k(T, RH, RI, D, v, c) = k0_c \cdot \exp\left(-\frac{Ea_c}{R \cdot T}\right) \cdot f_{RH}(RH) \cdot f_{RI}(RI) \cdot f_D(D) \cdot f_v(v) \ ..(5)$$

$$SL = \left(\frac{1}{k}\right) \cdot \ln\left(\frac{Q_0}{Q_{crit}}\right) \ ..... \ (6)$$

Once the ripeness index and shelf life are estimated, a freshness score is determined based on the shelf life, the ripeness index, and penalties for the one or more defects ($D$) and the lenticel density ($LD_{norm}$). The shelf life and ripeness index are normalized as in equations (7a) and (7b), respectively. Then, the freshness score is computed according to equation (7c). Typical values of sensitivities: $\gamma \approx 1 - 1.5$, $\delta \approx 1 - 2$, $\eta \approx 0.2 - 0.5$, $\xi \approx 0.1 - 0.3$. The freshness score helps in analyzing if the food item is fresh to consume, okay to consume, not appropriate to consume directly but can be used in some other form, or the food item is rotten and not fit for human consumption but can be used for non-edible purposes.

$$r = \frac{RI* - 1}{4} \in [0,1] \quad ... \ (7a)$$

$$\ell = \frac{RSL}{L_{max}} \in [0,1], \text{ where } L_{max} \text{ the scenario cap (e.g., 28 days) } .... \ (7b)$$

$$FS = 100 \cdot \ell^{\gamma} \cdot (1 - r)^{\delta} \cdot (1 - \eta \cdot D) \cdot (1 - \xi \cdot LD_{norm}) \ .... \ (7c)$$

The ripeness index, the shelf life, and the freshness score are given as output of the real-time quality assessment. For example, consider a food item (fruit) under controlled ripening at $T=293$ K, $RH=0.85$, low vibration $v=0.1$. The parameters used in real-time assessment are configured as $w_{img}=0.6$, $w_{bio}=0.4$, $\gamma=1.2$, $\delta=1.5$, $\eta=0.35$, $\xi=0.2$, D=0.2, $LD_{norm}=0.15$. Suppose the ripeness index $RI^* = 2.3$ and the shelf life $SL = 12$ days with $L_{max} \rightarrow 28$. Then, normalized ripeness index is $r = \frac{2.3-1}{4} \approx 0.325$ and normalized shelf life is $\ell=12/28 \approx 0.43$. Thus, the freshness score is determined as $FS \approx 100 \cdot 0.43^{1.2} \cdot (1 - 0.325)^{1.5} \cdot (1 - 0.35 \cdot 0.2) \cdot (1 - 0.2 \cdot 0.15) \approx 30.2$. The freshness score of 30.2 indicates that the food item is fresh.

The ripeness index (RI), mapped to a ripeness stage, can be used to recommend best possible usage of the food item. For example, suppose the food item is a mango, RI=1 indicates that mango is unripe, so the recommended usage is for preparing pickles, dehydrated slices for candied peels or store for controlled ripening. RI=2 indicates that mango is early ripe, so the mango is ideal for jams, chunda/chhundo, candies or it can be processed or continue ripening depending on demand. RI=3 indicates that mango is ripe, so it has optimal flavor/aroma and recommended usage is to consume fresh (table fruit), smoothies, desserts. RI=4 indicates that mango is overripe, so it is recommended to process it into pulp, nectar, juice, shakes, cook into preserves/sauces, and freeze pulp. RI=5 indicates that mango is rotten, so it has to be routed to non-food upcycling-fertilizer/compost, vegan leather feedstock from waste biomass, extract polysaccharides from skins for biodegradable packaging, extract mango seed oil/butter from kernels and the like.

The real-time quality assessment can also be used to provide personalized dietary recommendations. The trained VLM provides nutritional information on the food item based on the image. Then, calorific values are calculated based on the nutritional information. The calorific values along with user input on his/her sugar levels, is used to provide personalized dietary recommendations on portion size using algorithm 1.

---

### Algorithm 1: Personalized Dietary Matching

---

### Step 1: Extract Nutritional Values

1.1: Send the input image $\mathcal{I}$ to the trained VLM.

1.2: Extract nutritional values $\mathcal{N} = \{n_1, n_2, \dots, n_k\}$ such that:

$$n_i \in \{\text{Fructose, Vitamin C, Proteins, Lipids, Carbohydrates, etc.}\}, i = 1, 2, \dots, k.$$

### Step 2: Calculate Calorific Value

2.1: Compute calorific value $\mathcal{C}_{\text{food}}$ as:

$\mathcal{C}_{\text{food}} = \sum_{i=1}^{k} w_i\, n_i$, where $w_i$ represents the weightage factor for each nutrient $n_i$.

2.2: Query the database $\mathcal{D}$ (108) to find the calorific values and standard serving sizes for the food item.

2.3: Match the input $\mathcal{I}$ with entries in $\mathcal{D}$ to retrieve the matched calorific value $\mathcal{C}_{\text{match}}$.

### Step 3: Determine Serving Size

3.1: Assess the person's sugar level $\mathcal{L}_{\text{sugar}}$.

3.2: Initialize smallest unit size $\Delta s$ for serving adjustments.

3.3: Use a loop to estimate adjustment factors $\alpha$ and $\beta$:

For high sugar levels:   Set $\alpha = 1.0$.

   While $\mathcal{S}_{\text{std}} \cdot \alpha \cdot \mathcal{C}_{\text{match}} > \mathcal{T}_{\text{cal}}$,

$$\alpha = \alpha - \Delta s, \quad \text{where } \mathcal{T}_{\text{cal}} \text{ is the calorific threshold}$$

$$\text{For low sugar levels:} \quad \text{Set } \beta = 1.0.$$
$$\text{While } \mathcal{S}_{\text{std}} \cdot \beta \cdot \mathcal{C}_{\text{match}} < \mathcal{T}_{\text{cal}},$$
$$\beta = \beta + \Delta s.$$

3.4: Adjust the serving size $\mathcal{S}_{\text{serve}}$ using:

$$\mathcal{S}_{\text{serve}} = \begin{cases} \mathcal{S}_{\text{std}}, & \text{if } \mathcal{L}_{\text{sugar}} \text{ is normal,} \\ \mathcal{S}_{\text{std}} \cdot \alpha, & \text{if } \mathcal{L}_{\text{sugar}} \text{ is high,} \\ \mathcal{S}_{\text{std}} \cdot \beta, & \text{if } \mathcal{L}_{\text{sugar}} \text{ is low.} \end{cases}$$

Once the real-time quality assessment is completed, at step 208 of the method 200, the one or more hardware processors 104 are configured to generate an end-of-life recommendation based on the traceability data and the real-time quality assessment by performing at least one of: a) a recycling analysis and b) an upcycling analysis. Food packaging comes in variety of materials. These materials are single or multi layered, multi-laminate with different material combinations. Recyclers for each material have focused mechanism. The traceability data of the food item comprises a coded information on packaging material which is sent to a specific recycler based on material classification. The recycling analysis comprises classifying a packaging material of the food item comprised in the traceability data. Classification maps the packaging material to a pre-defined taxonomy using an ensemble of models: a large language model (e.g., Gemma) for text-based metadata classification using few-shot prompts (e.g., resin ID, thickness, coatings, barrier layers, supplier codes), and a computer-vision model for image-based recognition. Then, a primary disposal use of the packaging material is determined. For example, recycling, fibre making, molding, etc. Next, a plurality of disposal locations that accept the packaging material are identified and one of the plurality of disposal locations is recommended based on comparison of a distance between a user location and each of the plurality of disposal locations. Algorithm 2 summarizes the steps performed in the recycling analysis.

---

**Algorithm 2: Packaging Disposal and Recycling Optimization**

---

**Step 1: Material Identification**

1.1: Send $\mathcal{I}_{\text{pack}}$ and $\mathcal{D}_{\text{pack}}$ to the classification model $\mathcal{M}_{\text{class}}$.

1.2: Identify material type $\mathcal{T}_{\text{material}}$ using:

$$\mathcal{T}_{\text{material}} = \mathcal{M}_{\text{class}}\left(\mathcal{I}_{\text{pack}}, \mathcal{D}_{\text{pack}}\right),$$

where $\mathcal{T}_{\text{material}} \in \{\text{LDPE, HDPE, PET, etc.}\}$.

**Step 2: Target Use Determination**

2.1: Determine potential uses $\mathcal{U}_{\text{target}} = \{u_1, u_2, \dots, u_n\}$ for $\mathcal{T}_{\text{material}}$, where:

$$u_i \in \{\text{Recycling, Fibre Making, Moulding, etc.}\}.$$

2.2: Select the primary use $u_{\text{primary}}$ based on material properties and application priority:

$$u_{\text{primary}} = \arg\max_{u_i \in \mathcal{U}_{\text{target}}} \mathcal{P}(u_i | \mathcal{T}_{\text{material}}),$$

where $\mathcal{P}$ denotes the probability of suitability for each use.

**Step 3: Search for Disposal Locations**

3.1: Query the database $\mathcal{D}_{\text{loc}}$ (108) for locations $\mathcal{L} = \{l_1, l_2, \dots, l_m\}$ that accept $\mathcal{T}_{\text{material}}$ for $u_{\text{primary}}$.

3.2: Retrieve location details $\mathcal{P}_{\text{loc}} = \{p_1, p_2, \dots, p_m\}$, where:

$$p_i = (\text{Company Name, Address, Contact Info, Distance}),$$

for $i = 1, 2, \dots, m$.

## Step 4: Sort Locations by Distance

4.1: Calculate distances $\mathcal{D}_{\text{dist}} = \{d_1, d_2, \dots, d_m\}$ from the user's location $\mathcal{L}_{\text{user}}$ to each location $l_i$:

$$d_i = \| \mathcal{L}_{\text{user}} - l_i \|, \quad i = 1, 2, \dots, m.$$

4.2: Sort locations $\mathcal{L}$ by ascending order of $\mathcal{D}_{\text{dist}}$:

$$\mathcal{L}_{\text{sorted}} = \text{Sort}(\mathcal{L}, \mathcal{D}_{\text{dist}}).$$

## Step 5: Output Nearest Location

5.1: Select the nearest location $\mathcal{L}_{\text{nearest}}$:

$$\mathcal{L}_{\text{nearest}} = \mathcal{L}_{\text{sorted}}[1].$$

5.2: Retrieve and display details $\mathcal{P}_{\text{details}}$ of $\mathcal{L}_{\text{nearest}}$:

$$\mathcal{P}_{\text{details}} = \mathcal{P}_{\text{loc}}[1].$$

## Step 6: Final Recommendation

6.1: Return $\mathcal{L}_{\text{nearest}}$ and $\mathcal{P}_{\text{details}}$ to the user.

The upcycling analysis determines if the food item (fruit/vegetable/ herb) or parts of it can be repurposed (e.g., composted, reused in eco-friendly products, or used in aromatherapy, pectin from orange peels, antioxidants from potatoes). The upcycling analysis comprises identifying one or more repurposing opportunities for one or more portions of the food item based on the real-time quality assessment. In an embodiment, the one or more repurposing opportunities are identified based on the ripeness stage as described in step 206. For example, if the mango is rotten, then, it cannot be consumed but it can be repurposed to manufacture fertilizer/compost, vegan leather, biodegradable packaging by extracting polysaccharides from skins or mango seed oil/butter extracted from kernels. In another embodiment, the ripeness index, shelf life and freshness score of the food item is given to a large language model (LLM) with a prompt to identify possible repurposing opportunities. Then, the method 200 recommends a processing facility suitable for a selected repurposing opportunity among the one or more repurposing opportunities.

In an embodiment, the method 200 is implemented as a mobile application or a web application, and it can be designed to be user-friendly for all stakeholders involved in the food industry supply chain- from farmer to consumers to up cyclers to recyclers. The mobile application is created with React Native or Flutter, in one example embodiment of the present disclosure. A user can scan the NFC tag on the food item through this mobile app. It provides a comprehensive and interactive dashboard showing the food's source, status, predicted survival time, and possible recycling options. The mobile application also gives a simple form for farmer/producer to input essential details associated with the food item (e.g., food species, source, harvest date, storage conditions, processing techniques, estimated shelf life, best storage practices, etc.) which is then stored in the database 108 along with item ID encoded in the machine readable tag. The mobile application enables real-time communication with consumers to understand the history of the food item and consumption efficiency of the food item. Graphical representations of food status: early ripe, ripe, over ripe, stale, rotten with nutrition chart mentioning caloric value, fructose, combined sugar, elemental micronutrients are provided to the user via the mobile application. This information can be available either in the form of static data or dynamic updates in real-time. During the transition of fruit/vegetable/herb maturation, there are changes in the biochemical parameters which transition with time. They directly affect calorific value which is an important parameter in personalized diet. The mobile application/system 100 provides a personalized dietary recommendation which helps the user to choose when to consume the food depending on its sugar, vitamin C, calorie concentration for suitable dietary need in real time and just not static information.

An example user flow within the mobile application begins with user registration and proceeds through user login, the home screen, profile page, scanning page, result screen, QR code scanning screen, QR code result screen, and logout. Initially, the user registers in the mobile application by providing the required details in a registration page which has validation checks for each field. Then, the user logs into the application via a login page. After login, a home page displays a history of scans and clicking on a record will direct the user to a result page of each food scan. Further, the user can scan the NFC tag on the food item through the application. After the scan, the results of the food model analysis are displayed on a result page, including details such as the type of food, ripeness percentage, days remaining, and humidity. For example, suppose a tag on a tomato is scanned, the ripening state of the tomato is displayed indicating that it is 96% ripe and ready for immediate use. Product information, including the name of the food, place of origin, journey, and distance travelled by the food item is also displayed. Users can change their information on the profile page, including phone number, date of birth, gender, Body Mass Index (BMI), etc. Consumers/users can use this info to match their dietary food requirements. Retailers can utilize this information to keep a tap on consumer purchase patterns and insights. Consumer feedback and insights can be sent to food producers for improvement. Historical data from previous scans is available and accessible to consumers. For example, previous scans of tomatoes showing various ripening stages is available in the mobile application. This information helps consumers determine the optimal time to consume tomatoes. For retailers, the data enables predictions about ripening stages, facilitating inventory planning and stock clearance. If tomatoes become overripe and the risk of wastage is high, retailers can make commercially viable decisions to collaborate with biochemical extraction companies, allowing them to sell the stock at reduced rates and thus prevent food waste.

The embodiments of present disclosure benefits producers, retailers, and consumers in various ways. Food producers can create branding, customer loyalty and develop trust in their products. In the event of a food safety issue, the digital passport system allows for rapid and precise recalls, minimizing risks to consumers. Further, the digital food passport system enables operational efficiency by streamlining the supply chain by providing real-time data which can lead to cost effective supply. For a retailer, real-time data analysis and updated reports aid in making wiser decisions for better pricing of fresh food. Lowering the prices of food about to ripen, for stock clearance, to prevent wastage, to maintain cost effective inventory. This helps them gain carbon credits by maintaining sustainable business model achieve green points for fostering a more environmentally conscious food system and less food waste. The application is a practical solution to prevent food wastage by effective use of fresh produce. The application directly aids in achieving Sustainable Development Goals (SDG) 2, 3, 11, 12, 13, 17, and so on. For consumers, traceability of food items is a major benefit. Consumers gain access to detailed information about their food, source, food quality, ideal time for consumption, fostering trust and enabling informed purchasing decisions. Integrating user's profile information and nutritional information of the product can be used for dietary nutrition matching of the user.

Monetization and Commercial Use of embodiments of present disclosure:

1. Subscription Model: Users (such as farmers, wholesalers, retailers, consumers, and recyclers) could subscribe for advanced analytics, status reports, and upcycling and recycling services.
2. Incentive: The consumers could generate income through incentivizing the circularity of leftover food for upcycling into vegan leather, aroma oils, cosmetics, and biotechnology byproducts.
3. Data Licensing: Providing the system's analytics and data to academic researchers or environmental agencies focusing on sustainability in the food industry.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is noted that embodiments described herein are discussed in the context of a Large Language Model (LLM) and/ or with a mentioned training data set. It is to be understood by a person having ordinary skill in the art or person skilled in the art that the referred LLM model(s) are exemplary and shall not be construed as limiting the scope of the present disclosure and they may be trained by any training dataset that meets the mentioned defining characteristics and/ or has characteristics that define the exemplary training dataset mentioned.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:

    obtaining (202), via one or more hardware processors, i) an image of a food item, and ii) an item identifier associated with the food item by scanning a machine readable tag affixed on the food item;
    retrieving (204), via the one or more hardware processors, a traceability data of the food item from a preconfigured database using the item identifier, wherein the traceability data comprises a static metadata and one or more dynamic journey events of the food item;
    performing (206), via the one or more hardware processors, a real-time quality assessment of the food item based on the image of the food item and the traceability data using a trained Visual Language Model (VLM) and a trained physics based model; and
    generating (208), via the one or more hardware processors, an end-of-life recommendation based on the traceability data and the real-time quality assessment by performing at least one of: a) a recycling analysis and b) an upcycling analysis,
    wherein the recycling analysis comprises:

        classifying a packaging material of the food item comprised in the traceability data;
        determining a primary disposal use of the packaging material;
        identifying a plurality of disposal locations that accept the packaging material; and
        recommending a disposal location among a plurality of disposal locations based on comparison of a distance between a user location and each of the plurality of disposal locations;

    and wherein the upcycling analysis comprises:

identifying one or more repurposing opportunities for one or more portions of the food item based on the real-time quality assessment; and

recommending a processing facility suitable for a selected repurposing opportunity among the one or more repurposing opportunities.

2. The processor implemented method as claimed in claim 1, wherein the machine readable tag is encoded with a metadata comprising at least a location of packaging, a date of packaging, a type of packaging material, a best-before date, a shelf life, a target use, one or more producer details, and one or more nutritional values.

3. The processor implemented method as claimed in claim 1, wherein performing the real-time quality assessment of the food item based on the image of the food item and the traceability data using the trained VLM and the trained physics based model comprises:

extracting a plurality of features from the image, wherein the plurality of features comprise a color index, a hue value, a lenticel density, and one or more defects;

determining a ripeness index of the food item by:

estimating an image-derived ripeness value using the pretrained VLM based on the plurality of features;
estimating a biochemical-derived ripeness value using data from a plurality of biochemical sensors; and
computing the ripeness index as a weighted sum of the image-derived ripeness value and the biochemical-derived ripeness value;

determining a shelf life of the food item using the trained physics based model based on the traceability data; and
determining a freshness score based on the shelf life, the ripeness index, and penalties for the one or more defects and the lenticel density, wherein the ripeness index, the shelf life, and the freshness score are provided as outputs of the real-time quality assessment.

4. A system (100), comprising:

a memory (102) storing instructions;
one or more Input/Output (I/O) interfaces (106); and
one or more hardware processors (104) coupled to the memory (102) via the one or more communication interfaces (106), wherein the one or more hardware processors (104) are configured by the instructions to:

obtain i) an image of a food item, and ii) an item identifier associated with the food item by scanning a machine readable tag affixed on the food item;
retrieve a traceability data of the food item from a preconfigured database using the item identifier, wherein the traceability data comprises a static metadata and one or more dynamic journey events of the food item;
perform a real-time quality assessment of the food item based on the image of the food item and the traceability data using a trained Visual Language Model (VLM) and a trained physics based model; and
generate an end-of-life recommendation based on the traceability data and the real-time quality assessment by performing at least one of: a) a recycling analysis and b) an upcycling analysis,
wherein the recycling analysis comprises:

classifying a packaging material of the food item comprised in the traceability data;
determining a primary disposal use of the packaging material;
identifying a plurality of disposal locations that accept the packaging material; and
recommending a disposal location among a plurality of disposal locations based on comparison of a distance between a user location and each of the plurality of disposal locations;

and wherein the upcycling analysis comprises:

identifying one or more repurposing opportunities for one or more portions of the food item based on the real-time quality assessment; and
recommending a processing facility suitable for a selected repurposing opportunity among the one or more repurposing opportunities

5. The system as claimed in claim 4, wherein the machine readable tag is encoded with a metadata comprising at least a location of packaging, a date of packaging, a type of packaging material, a best-before date, a shelf life, a target use, one or more producer details, and one or more nutritional values.

6. The system as claimed in claim 4, wherein performing the real-time quality assessment of the food item based on the image of the food item and the traceability data using the trained VLM and the trained physics based model comprises:

extracting a plurality of features from the image, wherein the plurality of features comprise a color index, a hue value, a lenticel density, and one or more defects;
determining a ripeness index of the food item by:

estimating an image-derived ripeness value using the pretrained VLM based on the plurality of features;
estimating a biochemical-derived ripeness value using data from a plurality of biochemical sensors; and
computing the ripeness index as a weighted sum of the image-derived ripeness value and the biochemical-derived ripeness value;

determining a shelf life of the food item using the trained physics based model based on the traceability data; and
determining a freshness score based on the shelf life, the ripeness index, and penalties for the one or more defects and the lenticel density, wherein the ripeness index, the shelf life, and the freshness score are outputs of the real-time quality assessment.

7. One or more non-transitory machine-readable information storage mediums comprising one or more instructions which when executed by one or more hardware processors cause:

obtaining i) an image of a food item, and ii) an item identifier associated with the food item by scanning a machine readable tag affixed on the food item;
retrieving a traceability data of the food item from a preconfigured database using the item identifier, wherein the traceability data comprises a static metadata and one or more dynamic journey events of the food item;
performing a real-time quality assessment of the food item based on the image of the food item and the traceability data using a trained Visual Language Model (VLM) and a trained physics based model; and
generating an end-of-life recommendation based on the traceability data and the real-time quality assessment by performing at least one of: a) a recycling analysis and b) an upcycling analysis,
wherein the recycling analysis comprises:

classifying a packaging material of the food item comprised in the traceability data;
determining a primary disposal use of the packaging material;
identifying a plurality of disposal locations that accept the packaging material; and
recommending a disposal location among a plurality of disposal locations based on comparison of a distance between a user location and each of the plurality of disposal locations;

and wherein the upcycling analysis comprises:

identifying one or more repurposing opportunities for one or more portions of the food item based on the real-time quality assessment; and
recommending a processing facility suitable for a selected repurposing opportunity among the one or more repurposing opportunities.

8. The one or more non-transitory machine readable information storage mediums as claimed in claim 7, wherein the machine readable tag is encoded with a metadata comprising at least a location of packaging, a date of packaging, a type of packaging material, a best-before date, a shelf life, a target use, one or more producer details, and one or more nutritional values.

9. The one or more non-transitory machine readable information storage mediums as claimed in claim 7, wherein performing the real-time quality assessment of the food item based on the image of the food item and the traceability data using the trained VLM and the trained physics based model comprises:

extracting a plurality of features from the image, wherein the plurality of features comprise a color index, a hue value, a lenticel density, and one or more defects;
determining a ripeness index of the food item by:

estimating an image-derived ripeness value using the pretrained VLM based on the plurality of features; estimating a biochemical-derived ripeness value using data from a plurality of biochemical sensors; and computing the ripeness index as a weighted sum of the image-derived ripeness value and the biochemical-derived ripeness value;

determining a shelf life of the food item using the trained physics based model based on the traceability data; and determining a freshness score based on the shelf life, the ripeness index, and penalties for the one or more defects and the lenticel density, wherein the ripeness index, the shelf life, and the freshness score are provided as outputs of the real-time quality assessment.

SYSTEM 100

MEMORY 102

DATABASE 108

HARDWARE
PROCESSOR(S)
104

I/O INTERFACE(S)
106

FIG. 1

200

Obtaining i) an image of a food item, and ii) an item identifier associated with the food item by scanning a machine readable tag affixed on the food item ⟋ 202

Retrieving a traceability data of the food item from a preconfigured database using the item identifier, wherein the traceability data comprises a static metadata and one or more dynamic journey events of the food item ⟋ 204

Performing a real-time quality assessment of the food item based on the image of the food item and the traceability data using a trained Visual Language Model (VLM) and a trained physics based model ⟋ 206

Generating an end-of-life recommendation based on the traceability data and the real-time quality assessment by performing at least one of: a) a recycling analysis and b) an upcycling analysis ⟋ 208

FIG. 2

| | Europäisches Patentamt European Patent Office Office européen des brevets | **EUROPEAN SEARCH REPORT** | Application Number EP 26 15 1211 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/250531 A1 (RAI BEENA [IN] ET AL) 6 August 2020 (2020-08-06) * paragraph [0046] - paragraph [0083] * ----- | 1-9 | INV. G06Q10/0833 G06Q10/087 G06Q10/30 |
| Y | US 2022/004832 A1 (DOHENY II EDWARD L [US] ET AL) 6 January 2022 (2022-01-06) * paragraph [0098] - paragraph [0121] * ----- | 1-9 | |
| A | GOH JIN YU ET AL: "Vision Language Models for Oil Palm Fresh Fruit Bunch Ripeness Classification", 2024 IEEE 8TH INTERNATIONAL CONFERENCE ON SIGNAL AND IMAGE PROCESSING APPLICATIONS (ICSIPA), IEEE, 3 September 2024 (2024-09-03), pages 1-6, XP034709841, DOI: 10.1109/ICSIPA62061.2024.10686009 [retrieved on 2024-09-26] * Chapter 2 and 3 * ----- | 1-9 | |
| | | | **TECHNICAL FIELDS SEARCHED (IPC)** G06Q |

The present search report has been drawn up for all claims

| Place of search | Date of completion of the search | Examiner |
|---|---|---|
| Munich | 17 February 2026 | Hartmann, Janka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

**EP 4 779 541 A1**

## ANNEX TO THE EUROPEAN SEARCH REPORT
## ON EUROPEAN PATENT APPLICATION NO.

EP 26 15 1211

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2026

| Patent document cited in search report | Publication date | Patent family member(s) | Publication date |
|---|---|---|---|
| US 2020250531 A1 | 06-08-2020 | EP 3693907 A1 | 12-08-2020 |
| | | EP 3716275 A1 | 30-09-2020 |
| | | US 2020250531 A1 | 06-08-2020 |
| US 2022004832 A1 | 06-01-2022 | US 2022004832 A1 | 06-01-2022 |
| | | WO 2020102613 A1 | 22-05-2020 |

EPO FORM P0459

For more details about this annex : see Official Journal of the European Patent Office, No. 12/82

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202521004097

- IN 201921004783